# EUROPÄISCHE PATENTANMELDUNG

(11) **EP 1 666 231 A1**
(43) Veröffentlichungstag der Anmeldung: **07.06.2006**
(21) Anmeldenummer: 04028715.3
(22) Anmeldetag: 03.12.2004
(51) Int. Cl.: B29C 51/08, B29C 51/36, B29C 44/12, B29C 45/14, B62D 25/00

(54) **Verfahren zum Herstellen eines Verbundbauteils und Tiefziehform hierfür**

(71) Anmelder: ArvinMeritor GmbH, 63128 Dietzenbach (DE)
(72) Erfinder: Beck, Herbert, 38302 Wolfenbüttel (DE); Ludwig, Matthias, 38159 Vechelde (DE); Niesner, Tobias, 38518 Gifhorn (DE)
(74) Vertreter: Kitzhofer, Thomas

(57) **Zusammenfassung**

Ein Verfahren zum Herstellen eines Verbundbauteils sieht die Verwendung eines Tiefziehform (10) vor, die Einbuchtungen (32, 44, 58) oder Erhebungen besitzen, in denen an den Ecken jeweils Schlitze (40, 52, 54, 62, 64) in der Tiefziehform (10) vorgesehen sind, über die Luft beim Tiefziehen abgesaugt wird.

## Beschreibung

Die Erfindung betrifft ein Verfahren zum Herstellen eines Verbundbauteils, insbesondere eines großflächigen Fahrzeugkarosserie-Anbauteils, sowie eine Tiefziehform zum Tiefziehen einer zu hinterschäumenden oder zu hinterspritzenden Folie.

Fahrzeugkarosserieanbauteile sind solche Teile, die im fertig montierten Zustand des Fahrzeugs einen Abschnitt der Außenhaut bilden und an der Karosserie befestigt werden. Derartige Karosserieanbauteile sind beispielsweise Fahrzeugdächer, Türen, Türenaußenverkleidungen, Klappen wie Heckklappe oder Motorraumdeckel, Kotflügel, Stoßstangen, Windabweiser etc. Diese Fahrzeugkarosserieanbauteile können durch Hinterschäumen oder Hinterspritzen einer Folie, insbesondere einer Kunststoff- oder Aluminiumfolie, einfach hergestellt werden. Die Folie bildet nach dem Herstellen des Verbundbauteils die sichtbare Außenhaut des Fahrzeugs. Bei solchen großflächigen Verbundbauteilen, deren Dicke ein Vielfaches kleiner als ihre sichtbare Außenfläche ist, werden auch gerne Sicken aus technischen oder ästhetischen Gründen vorgesehen. Diese Sicken sollen, wenn es um die Ästhetik geht, relativ kantig im Querschnitt ausgeformt sein. Als Sicke ist in diesem Zusammenhang auch ein stufenförmiger Absatz anzusehen. Die Tiefziehform hat zur Bildung dieser Sicke eine Einbuchtung oder Erhebung, die durch zwei längs einer Schnittlinie aufeinandertreffenden Flächen gebildet ist. Der Sickengrund wird durch die Schnittlinie gebildet. Damit die Folie beim Tiefziehen auch die entsprechend gewünschte Kante erhält, münden Bohrungen eines Ansaugkanals in die Schnittlinie. Durch das beim Tiefziehen angelegte Vakuum wird die Luft zwischen Folie und Tiefziehform herausgesaugt, und die Folie wird in die Ecke der Einbuchtung, im Schnitt gesehen, gezogen.

Aufgabe der Erfindung ist es, ein Verfahren und eine Tiefziehform zu schaffen, die für eine bessere Oberflächenqualität der Außenhaut des Verbundbauteils sorgt.

Das erfindungsgemäße Verfahren sieht folgende Schritte vor:
a) eine Tiefziehform mit einer langgestreckten winkligen Einbuchtung oder Erhebung wird verwendet zur Bildung einer langgestreckten, kantigen Sicke in der die Außenhaut des fertigen Verbundbauteils definierenden Folie, wobei die Einbuchtung oder Erhebung durch zwei längs einer Schnittlinie aufeinandertreffenden Flächen gebildet ist,
b) die Folie wird in ein mit der Tiefziehform versehenes Tiefziehwerkzeug gelegt,
c) über einen längs der Schnittlinie verlaufenden Schlitz in der Tiefziehform als Ausläufer eines Ansaugkanals wird die Folie angesaugt,
d) die Folie wird tiefgezogen.

Dieses im Schritt c) vorgesehene Ansaugen kann vor dem Tiefziehen beginnen. Es wird zumindest während des Tiefziehvorgangs angesaugt.

Die Erfindung sieht vor, daß nicht über kleine, voneinander beabstandete Ansaugbohrungen gearbeitet wird, sondern über einen sehr langen, schmalen Schlitz. Dieser Schlitz zeichnet sich im Gegensatz zu den Ansaugbohrungen nicht in der plastisch verformten, tiefgezogenen Folie ab, so daß diese eine höhere ästhetische Qualität aufweist. Darüber hinaus hat man bei Versuchen festgestellt, daß der Sickengrund oder, allgemeiner die Ecken der Sicke, deutlich scharfkantiger ausgebildet werden als bei den voneinander beabstandeten Ansaugbohrungen. Sicken sind insbesondere Ausgangspunkte von Erhebungen wie Wülsten oder anderen konvexen Konturen, die sich unmittelbar an die Sicke anschließen. Zu betonen ist, daß das fertige Verbundbauteil natürlich im Bereich der Schnittlinie nicht unbedingt eine Sicke aufweisen muß, sondern auch eine nach außen stehende Kante. Das Tiefziehen kann eine Sicke erzeugen, wenn man die Folie jedoch dann wendet, wird die Sicke zu einem Vorsprung, der rückseitig hinterschäumt/hinterspritzt werden kann.

Bei einer bevorzugten Ausführungsform jedoch soll es so sein, daß die Folie auf der der mit dem Schlitz versehenen Tiefziehform zugewandten Seite hinterschäumt bzw. hinterspritzt wird.

Das Verbundbauteil wird bevorzugt ein großflächiges Fahrzeugkarosserieanbauteil sein.

Die beim Tiefziehen verwendete Folie ist z.B. eine mehrschichtige Koextrusionsfolie, bei der die Außenschicht besonders kratzfest ausgebildet sein kann. Vorzugsweise ist die Folie durchgefärbt, so daß das Verbundbauteil nicht mehr lackiert wird.

Die Dicke der Folie beträgt wenigstens 1 mm, vorzugsweise mehr als 1,2 mm gemäß der bevorzugten Ausführungsform.

Um das Vakuum im Bereich des Schlitzes möglichst schnell aufzubauen, münden insbesondere mehrere Ansaugkanäle oder Ansaugbohrungen in den Schlitz.

Die Breite des Schlitzes hängt z.B. von der Foliendicke und/oder von der Form der Sicke und vor allem auch vom Radius am Sickengrund ab. Es hat sich jedoch herauskristallisiert, daß der Schlitz eine Breite von maximal 0,8 mm haben sollte.

Es lassen sich aber auch allgemeinere Aussagen treffen, z.B., daß die Schlitzbreite maximal die Hälfte des Krümmungsradius an der Schnittlinie haben sollte.

Die Schlitzbreite sollte maximal 60 %, bevorzugt sogar maximal 50 % der Foliendicke betragen, wie in einer bevorzugten Ausführungsform definiert ist.

Die Folie wird nach dem Tiefziehen und bevorzugt auch nach dem Hinterschäumen oder Hinterspritzen beschnitten, wobei die Sicke im nicht abgetrennten Abschnitt liegt, also im sichtbaren Teil des fertigen Verbundbauteils.

Der Schlitz erstreckt sich im wesentlichen über die gesamte Länge der Einbuchtung oder der Erhebung, um keine störenden Abzeichnungen an der Folie zu erhalten.

Die Erfindung betrifft darüber hinaus eine Tiefziehform zum Tiefziehen einer zu hinterschäumenden/hinterspritzenden Folie, wobei die Tiefziehform eine Auflagefläche für die Folie mit einer langgestreckten Einbuchtung oder Erhebung aufweist, die durch zwei längs einer Schnittlinie aufeinandertreffenden Flächen gebildet ist, wobei in der Tiefziehform ein Ansaugkanal vorgesehen ist. Die erfindungsgemäße Tiefziehform sieht vor, daß die Anlagefläche längs der Schnittlinie einen langgestreckten Schlitz aufweist, der ja im Zusammenhang mit dem erfindungsgemäßen Verfahren zuvor schon ausführlich beschrieben worden ist. Sämtliche oben genannten Details sind optional auch als Details der Tiefziehform selbst zu sehen.

Die Einbuchtung oder Erhebung hat gemäß einer Ausführungsform einen U-förmigen Querschnitt, wobei an den Ecken des "U" jeweils ein längsverlaufender Schlitz vorgesehen ist. Andere Ausführungsformen sehen eine V-förmige Nut vor.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf eine Tiefziehform eines erfindungsgemäßen Tiefziehwerkzeugs mit darüberliegender, an die Kontur bereits angepaßter, tiefgezogener Folie,
- Figur 2 eine vergrößerte Ansicht des vorderen rechten Eckbereichs der Tiefziehform nach Figur 1,
- Figur 3 eine Querschnittsansicht durch das Tiefziehwerkzeug längs der Linie III-III in Figur 2,
- Figur 4 eine schematische Schnittansicht durch ein Hinterschäum- oder Hinterspritzwerkzeug mit fertigem, hinterschäumten oder hinterspritzten Verbundbauteil nach der Erfindung, und
- Figur 5 ein Fahrzeugfrontteil mit einer erfindungsgemäß hergestellten Motorhaube.

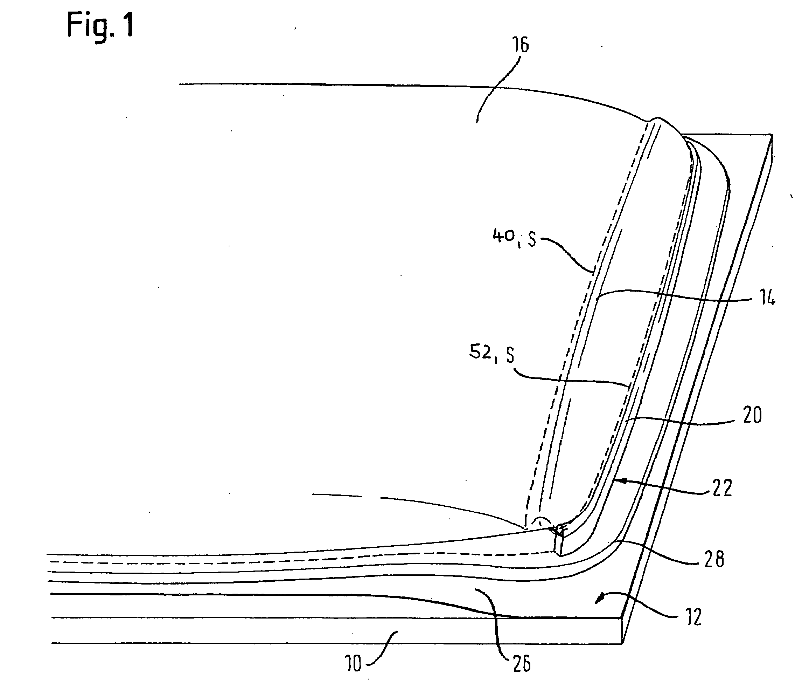

In Figur 1 ist die rechte Hälfte einer Tiefziehform 10 dargestellt. Die Tiefziehform dient zum Tiefziehen einer wenigstens 1 mm dicken mehrschichtigen, durchgefärbten Koextrusionsfolie 12, die in Figur 1 auf die Auflagefläche (Oberseite) der Tiefziehform 10 aufgelegt und schon tiefgezogen ist und deshalb die Kontur der Auflagefläche nachzeichnet.

Die Folie 12, die in dünnen Platten angeliefert wird, wird im Tiefziehwerkzeug tiefgezogen und wird später die Außenhaut eines großflächigen Karosserieanbauteils bilden. Vorliegend ist das Karosserieanbauteil ein Fahrzeugdachmodul. Wie in den Figuren 1 bis 3 zu erkennen ist, weist die Außenhaut, also die Folie, einen in Fahrzeuglängsrichtung am Rand des späteren Dachmoduls verlaufenden, nach oben stehenden wulstartigen Steg 14 auf, der gegenüber dem übrigen, gewölbten Innenabschnitt 16 des Dachs erhaben ist. Der Steg 14 läuft zum äußeren Rand hin zu einer U-förmigen Sicke 18 in Form einer Regenablaufrinne, an die sich ein seitlicher Wulst 20 anschließt, an den sich wiederum eine ebenfalls U-förmige Sicke 22 anschließt. Von der Sicke 22 aus erstreckt sich ein seitlicher Flanschrand 26 über den gesamten Folienrand, d.h. er ist umfangsmäßig geschlossen. Der Flanschrand 26 hat einen Absatz 28.

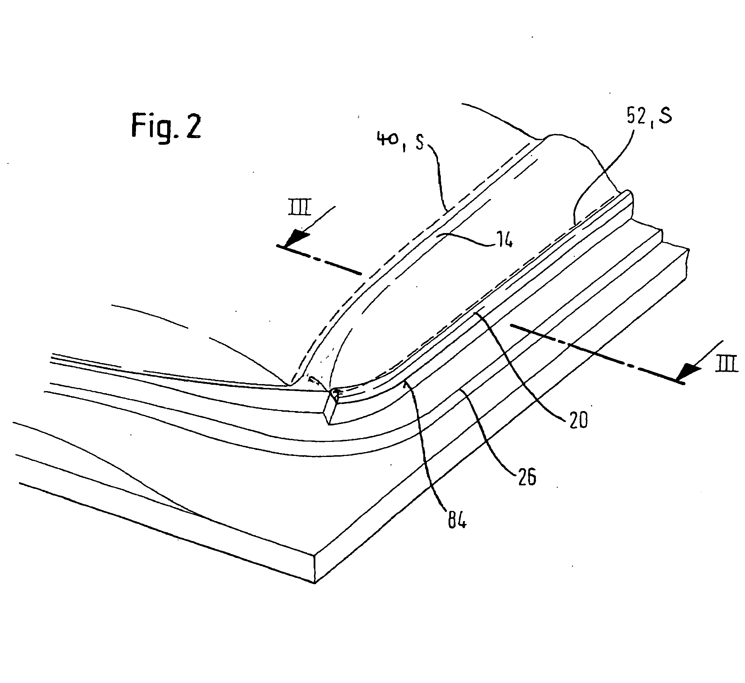

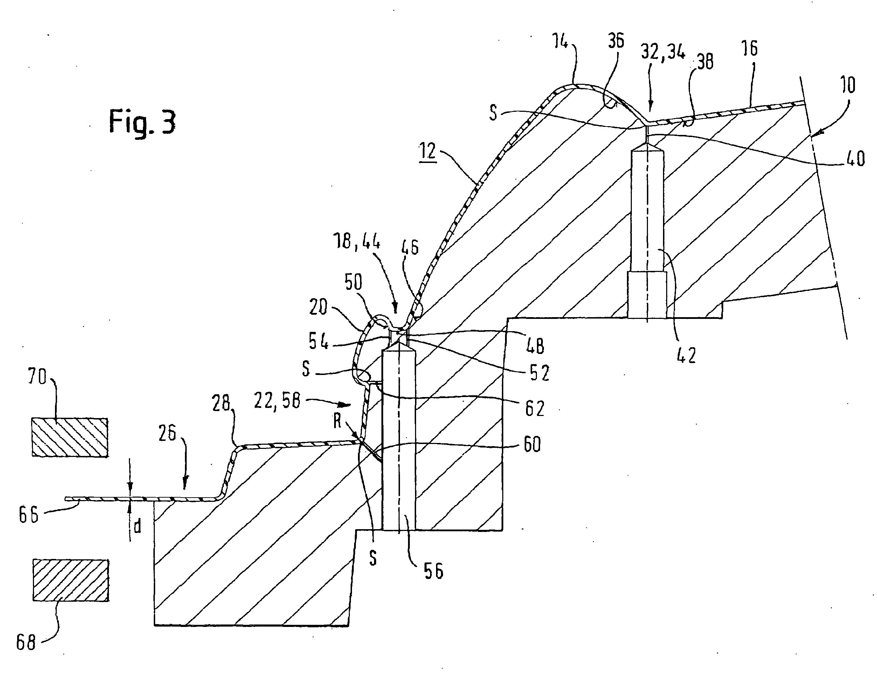

Die Tiefziehform 10 hat mehrere Einbuchtungen und Erhebungen, die zur Bildung von Sicken in der Folie 12 vorgesehen sind. Zwischen dem Innenabschnitt 16 und dem Steg 14 ist eine scharfkantige V-förmige Einbuchtung 32 (Fig. 3) in der Tiefziehform 10 zur Bildung einer Sicke 34 in der Folie 12 vorgesehen. Die Einbuchtung 32 entsteht durch zwei längs einer Schnittlinie S aufeinandertreffenden Flächen 36, 38, wobei die Fläche 36 eine Erhebung definiert. Längs der Schnittlinie S verläuft ein dünner, langgestreckter Schlitz 40, in den zahlreiche, senkrecht zur Zeichenebene voneinander beabstandete Ansaugbohrungen 42 als Ansaugkanäle münden. Der Schlitz 40 erstreckt sich, wie in Figur 1 zu sehen ist, über die gesamte Länge der Einbuchtung. In Figur 1 ist der Schlitz 40 mit unterbrochenen Linien dargestellt, da er unterhalb der Folie 12 liegt. Die sich durch die Sicken 34, 38 ergebenden Kanten sind zur besseren Darstellung in den Figuren 1 und 2 nicht als Linien dargestellt. Sie fallen zeichnerisch mit den Schlitzen 40, 52 und Schnittlinien S zusammen. Die Schlitze 40, 52 sind allerdings durchgehend. Unterbrochene Schlitze, die ähnlich einer Perforation aussehen, sind zwar möglich, hier besteht jedoch die Gefahr, daß sich die Schlitzlängsenden in der Folie 12 abzeichnen. Bei der Erfindung sind die Schlitze sehr schmal, deutlich schmäler als bisher verwendete Ansauglöcher. Dadurch wird die Folie nicht in die Schlitze eingezogen. Durch den aufgrund der Länge der Schlitze aber gesteigerten Ansaugquerschnitt werden die Ansaugwirkung verbessert, das Ansaugen beschleunigt und die Qualität des Produkts gesteigert.

In der Sicke 18, die durch eine Einbuchtung 44 in der Tiefziehform gebildet wird, sind an den Ecken des "U", wo die Flächen 46, 48 und 48, 50 aufeinandertreffen, ebenfalls zwei über die gesamte Länge der Einbuchtung 44 erstreckende Schlitze 52, 54 vorgesehen. Die Einbuchtung 44 wird von Erhebungen (Flächen 46, 50) begrenzt, wobei die Begriffe "Einbuchtung" und "Erhebung" relative, von der Bezugsebene abhängige Begriffe sind. Die "Ecken" der Einbuchtung 44 bilden damit langgestreckte Schnittlinien, in die die Schlitze 52, 54 münden. Zur Verbesserung der Übersichtlichkeit ist das Bezugszeichen S hier allerdings weggelassen worden. Die Schlitze 52, 54 münden in gemeinsame Ansaugbohrungen 56. Auch die der Sicke 22 zugeordnete Einbuchtung 58 in der Tiefziehform 10 ist durch Schlitze 60, 62 an den Ecken, d.h. den Schnittlinien S von aufeinandertreffenden Flächen definiert. Die entsprechenden Schlitze tragen die Bezugszeichen 60, 62 und sind strömungsmäßig ebenfalls mit den Ansaugbohrungen 56 verbunden.

Sämtliche Schlitze erstrecken sich über im wesentlichen die gesamte Länge der entsprechenden Einbuchtung/Erhebung im Kantenbereich der Einbuchtung/Erhebung.

Die Schlitze haben eine Breite von maximal 0,8, vorzugsweise maximal 0,6 mm und werden durch Sägen oder Fräsen, Ätzen oder Laserschneiden hergestellt.

Die Herstellung des Karosserieanbauteils wird im folgenden erläutert. Zuerst wird die Folie im Bereich ihres äußeren Umfangsrandes 66 durch einen Spannrahmen 68, 70 gehalten, in das Tiefziehwerkzeug gelegt und durch ein eingefahrenes Heizelement erwärmt. Anschließend wird die beheizte Tiefziehform 10 nach oben gefahren, um die Folie 12 plastisch zu formen und tiefzuziehen. Während des Tiefziehvorgangs wird an den Ansaugkanal, d.h. die Ansaugbohrungen 42, 56 ein Vakuum angelegt, so daß keine Luft zwischen der Folie 12 und der Tiefziehform 10 in den Bereichen der Ecken der Einbuchtungen 32, 44, 58 verbleibt und die Folie 10 in die Ecken gesaugt wird.

So entsteht eine Folie 12 mit scharfen Abrißkanten in den Sicken 18, 22, 24 und sogar Hinterschnitten im Tiefziehrichtung (siehe Sicke 22). Die Schlitze selbst sind der fertigen Folie 12 nicht anzusehen. Die Breite der Schlitze beträgt vorzugsweise maximal die Hälfte des Radius R an der entsprechenden Schnittlinie S. Zur Verdeutlichung wurde in Figur 3 nur ein Radius R dargestellt, wobei entsprechendes aber auch für die anderen Schnittlinien gilt. Die Breite jedes Schlitzes ist darüber hinaus maximal 50 oder 60 % der Foliendicke d.

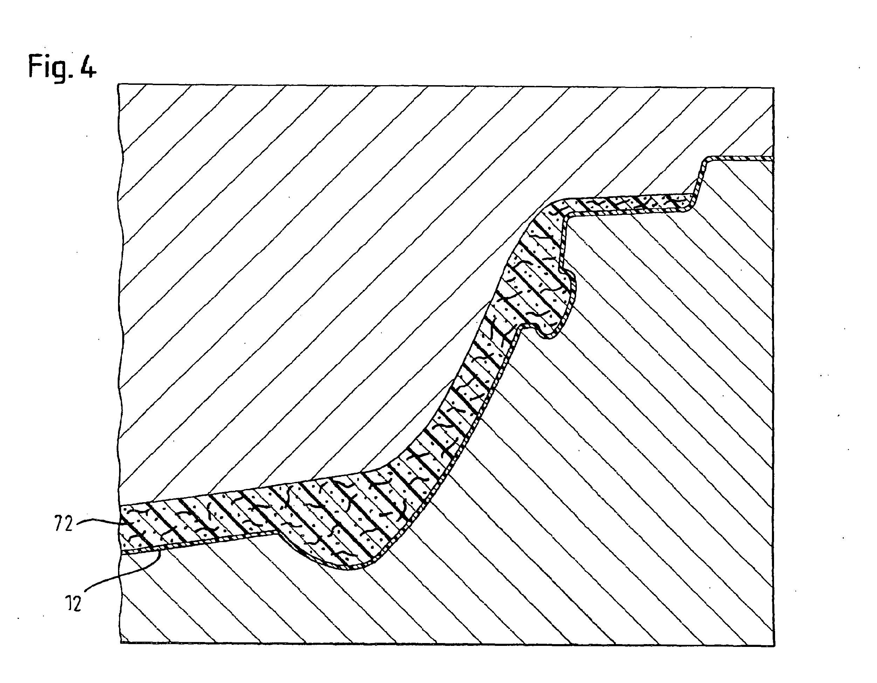

Nachdem die Folie 12 tiefgezogen wurde, wird sie dem Tiefziehwerkzeug entnommen und in ein Schäum- oder Spritzwerkzeug gelegt (siehe Figur 4). Die Rückseite der Folie 12, also diejenige Seite, die an der Tiefziehform 10 anliegt, liegt nach oben. Rückseitig wird flüssiges PU-Material 72 mit darin verteilten Glasfasern (LFI-Verfahren) aufgetragen. Anschließend wird die Schäumform geschlossen, und der Kunststoff schäumt aus. Alternativ wird die Folie hinterspritzt.

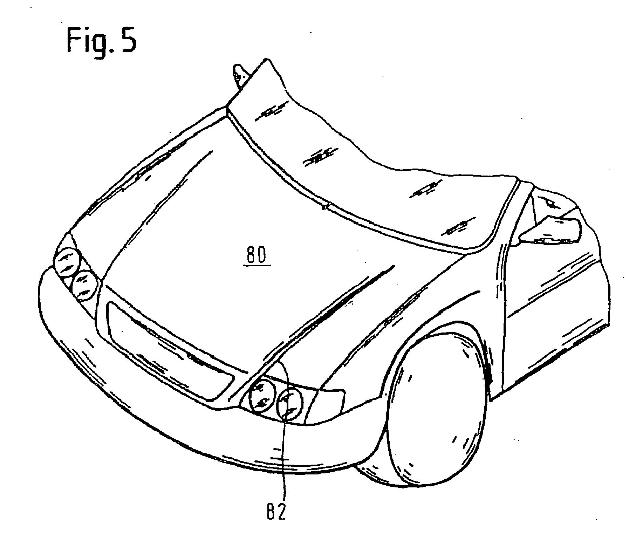

In Figur 5 ist eine zweite Ausführungsform eines erfindungsgemäß hergestellten Verbundbauteils dargestellt, nämlich in Form einer Motorhaube 80. Die Motorhaube hat eine vom Kühlerdrill ausgehende stufenförmige Erhebung, wobei die untere Stufe eine Sicke 82 bildet, die langgestreckt verläuft und durch einen entsprechenden Schlitz in der Tiefziehform gebildet wird.

Nach dem Hinterschäumen wird das Verbundbauteil randseitig umlaufend beschnitten. In Figur 2 ist dabei die spätere Schnittkante dargestellt, sie trägt das Bezugszeichen 84.

Der Zuschnitt erfolgt in der Sicke 22, die einen Hinterschnitt in Tiefziehrichtung (vertikale Richtung) darstellt. Die Schlitze 40, 52, 54, 62 liegen damit im sichtbaren Bereich des Verbundbauteils und nicht im Bereich des Randzuschnitts.

### Bezugszeichenliste:

- 10:: Tiefziehform
- 12:: Folie
- 14:: Steg
- 16:: Innenabschnitt
- 18:: Sicke
- 20:: Wulst
- 22:: Sicke
- 26:: Flanschrand
- 28:: Absatz
- 32:: Einbuchtung
- 34:: Sicke
- 36:: Fläche
- 38:: Fläche
- 40:: Schlitz
- 42:: Ansaugbohrung
- 44:: Einbuchtung
- 46:: Fläche
- 48:: Fläche
- 50:: Fläche
- 52:: Schlitz
- 54:: Schlitz
- 56:: Ansaugbohrung
- 58:: Einbuchtung
- 60:: Schlitz
- 62:: Schlitz
- 66:: Umfangsrand
- 68:: Spannrahmen
- 70:: Spannrahmen
- 72:: PU-Material
- 80:: Motorhaube
- 82:: Sicke
- 84:: Schnittkante

## Patentansprüche

1. Verfahren zum Herstellen eines Verbundbauteils,
mit einer die Außenhaut des fertigen Verbundbauteils definierenden Folie (12) **gekennzeichnet durch** folgende Schritte:
a) eine Tiefziehform (10) mit einer langgestreckten, winkligen Einbuchtung (32, 44, 58) oder Erhebung wird zur Bildung einer langgestreckten, kantigen Sicke (18, 22, 34; 82) in der Folie (12) verwendet,
wobei die Einbuchtung (32, 44, 58) oder Erhebung **durch** zwei längs einer Schnittlinie (S) aufeinandertreffenden Flächen (36, 38, 46, 48, 50) gebildet ist,
b) die Folie (12) wird in ein mit der Tiefziehform (10) versehenes Tiefziehwerkzeug gelegt,
c) über einen längs der Schnittlinie (S) verlaufenden Schlitz (40, 52, 54, 60, 62) in der Tiefziehform (10) als Ausläufer eines Ansaugkanals wird die Folie (10) angesaugt,
d) die Folie (12) wird tiefgezogen.

2. Verfahren nach Anspruch 1, **dadurch gekennzeichnet, daß** das Verbundbauteil ein großflächiges Fahrzeugkarosserieanbauteil ist.

3. Verfahren nach Anspruch 1 oder 2, **dadurch gekennzeichnet, daß** die Folie (12) auf der der mit dem Schlitz (40, 52, 54, 60, 62) versehenen Tiefziehform (10) zugewandten Seite hinterschäumt oder hinterspritzt wird.

4. Verfahren nach einem der vorhergehenden Ansprüche, **dadurch gekennzeichnet, daß** die Folie (12) eine mehrschichtige, insbesondere durchgefärbte Koextrusionsfolie ist.

5. Verfahren nach einem der vorhergehenden Ansprüche, **dadurch gekennzeichnet, daß** die Folie (12) eine Dicke von wenigstens 1 mm hat.

6. Verfahren nach einem der vorhergehenden Ansprüche, **dadurch gekennzeichnet, daß** mehrere Ansaugkanäle in den Schlitz (40, 52, 54, 60, 62) münden.

7. Verfahren nach einem der vorhergehenden Ansprüche, **dadurch gekennzeichnet, daß** der Schlitz (40, 52, 54, 60, 62) eine Breite von maximal 0,8 mm hat.

8. Verfahren nach einem der vorhergehenden Ansprüche, **dadurch gekennzeichnet, daß** der Schlitz (40, 52, 54, 60, 62) eine Breite von maximal 60 %, insbesondere maximal 50 % der Foliendicke (d) hat.

9. Verfahren nach einem der vorhergehenden Ansprüche, **dadurch gekennzeichnet, daß** der Schlitz (40, 52, 54, 60, 62) eine Breite von maximal der Hälfte des Krümmungsradius (R) der Tiefziehform (10) an der Schnittlinie (S) hat.

10. Verfahren nach einem der vorhergehenden Ansprüche, **dadurch gekennzeichnet, daß** die Folie (12) vor oder nach dem Hinterschäumen oder Hinterspritzen randseitig beschnitten wird, wobei die Sicke (18, 22, 34; 82) im nicht abgetrennten Abschnitt liegt.

11. Tiefziehform zum Tiefziehen einer zu hinterschäumenden/hinterspritzenden Folie (12), wobei
die Tiefziehform (10) eine Auflagefläche für die Folie (12) mit einer langgestreckten Einbuchtung (32, 44, 58) oder Erhebung aufweist, die durch zwei längs einer Schnittlinie (S) aufeinandertreffenden Flächen (36, 38, 46, 48, 50) gebildet ist, und wobei in der Tiefziehform (10) ein Ansaugkanal vorgesehen ist,
**dadurch gekennzeichnet,**
**daß** die Auflagefläche längs der Schnittlinie (S) einen langgestreckten, mit dem Ansaugkanal in Strömungsverbindung stehenden Schlitz (40, 52, 54, 60, 62) aufweist.

12. Tiefziehform nach Anspruch 11, **dadurch gekennzeichnet, daß** sich der Schlitz (40, 52, 54, 60, 62) über im wesentlichen die gesamte Länge der Einbuchtung (32, 44, 58) oder Erhebung erstreckt.

13. Tiefziehform nach Anspruch 11 oder 12, **dadurch gekennzeichnet, daß** mehrere Ansaugkanäle in den Schlitz (40, 52, 54, 60, 62) münden.

14. Tiefziehform nach einem der Ansprüche 11 bis 13, **dadurch gekennzeichnet, daß** die Einbuchtung (32, 44, 58) oder Erhebung eine U- oder V-förmige Querschnittsform hat und an den Ecken jeweils ein Schlitz (40, 52, 54, 60, 62) vorgesehen ist.
